# EUROPEAN PATENT APPLICATION

(11) **EP 2 135 838 A1**
(43) Date of publication of application: **23.12.2009**
(21) Application number: 08740135.2
(22) Date of filing: 09.04.2008
(51) Int. Cl.: B66F 9/24, B60L 9/18, B60L 11/08, B60L 11/18, B66F 9/22

(54) **CONTROL DEVICE FOR INDUSTRIAL VEHICLE**

(30) Priority: 10.04.2007 JP 2007102384; 13.12.2007 JP 2007321465
(71) Applicant: Kabushiki Kaisha Toyota Jidoshokki, Kariya-shi, Aichi 448-8671 (JP)
(72) Inventor: YASUFUKU, Akira, Kariya-shi Aichi 448-8671 (JP); NISHIO, Jun, Kariya-shi Aichi 448-8671 (JP)
(74) Representative: TBK-Patent
(86) International application number: PCT/JP2008/057032
(87) International publication number: WO 2008/126874

(57) **Abstract**

A control device for an industrial vehicle including an electric storage device, a load device, a hydraulic pump, and a load motor is disclosed. The electric storage device stores regenerative power generated through regenerative braking performed by the travel motor. The hydraulic pump supplies a hydraulic circuit with hydraulic oil to operate the load device. The load motor drives the hydraulic pump. The control device includes a power control unit and a resistance flow passage. The power control unit executes control for supplying the load motor with the regenerative power when the electric storage device is in a fully charged state during regenerative braking performed by the travel motor. The resistance flow passage is arranged in the hydraulic circuit and enables passage of hydraulic oil while applying flow resistance to the hydraulic oil. When the electric storage device is in the fully charged state during regenerative braking performed by the travel motor and, at the same time, the load device is not performing a load handling operation, the hydraulic oil supplied from the hydraulic pump is guided to the resistance flow passage.

## Description

### TECHNICAL FIELD

The present invention relates to an industrial vehicle including an electric storage device capable of storing regenerative power generated during regenerative braking.

### BACKGROUND ART

Patent document 1 discloses a control circuit protection technique that protects a control circuit for a battery forklift from overvoltage, which is generated by regenerative current during current regeneration. In the battery forklift described in patent document 1, the voltage at a line connected to a battery is detected, and control for supplying the regenerative current to a load motor is executed when the detected voltage is greater than or equal to a predetermined value. Thus, even if regenerative current cannot flow to the battery due to line breakage or the like, the regenerative current flows to the load motor, which drives a load pump. This suppresses excessive rising of the voltage at a line of the control circuit, and prevents damage from being inflicted on elements in the control circuit.

However, in the control circuit protection technique described in patent document 1, for example, if the forklift were to continue descending down a long hill, regenerative current may not be completely consumed just by activating the load motor and idly operating the load pump. Further, when the battery is in a fully charged state, the battery may be damaged if regenerative current is circulated to the battery. Thus, there is a demand for control that ensures the consumption of regenerative current in addition to circulating regenerative current to a battery when a line breakage occurs.
[Patent Document 1] Japanese Laid-Open Patent Publication No. 9-65505

### DISCLOSURE OF THE INVENTION

It is an object of the present invention to provide a control device for an industrial vehicle that executes control for ensuring consumption of surplus regenerative power that cannot be circulated to an electric storage device.

To achieve the above object, one aspect of the present invention provides a control device for an industrial vehicle including a travel motor, an electric storage device, a load device, a hydraulic pump, and a load motor. The electric storage device is capable of storing regenerative power generated through regenerative braking performed by the travel motor. The hydraulic pump supplies a hydraulic circuit with hydraulic oil to operate the load device. The load motor drives the hydraulic pump. The control device includes a power control unit and a resistance flow passage. The power control unit executes control for supplying the load motor with the regenerative power when the electric storage device is in a fully charged state during regenerative braking performed by the travel motor. The resistance flow passage is arranged in the hydraulic circuit and enables passage of hydraulic oil while applying flow resistance to the hydraulic oil. When the electric storage device is in the fully charged state during regenerative braking performed by the travel motor and, at the same time, the load device is not performing a load handling operation, the hydraulic oil supplied from the hydraulic pump is guided to the resistance flow passage.

### BRIEF DESCRIPTION OF THE DRAWINGS

Fig. 1 is a perspective view showing a forklift including a control device according to a first embodiment of the present invention;
Fig. 2 is a diagram showing main portions of the forklift of Fig. 1;
Fig. 3 is a flowchart showing control procedures executed by the control device of Fig. 2;
Fig. 4 is a diagram showing main portions of a forklift including a control device according to a second embodiment of the present invention;
Fig. 5 is a diagram showing main portions of a forklift including a control device according to a third embodiment of the present invention;
Fig. 6 is a diagram showing the structure of a control valve of Fig. 5; and
Fig. 7 is a flowchart showing control procedures executed by the control device of Fig. 5.

### BEST MODE FOR CARRYING OUT THE INVENTION

The best mode for carrying out the invention will now be discussed with reference to the drawings.

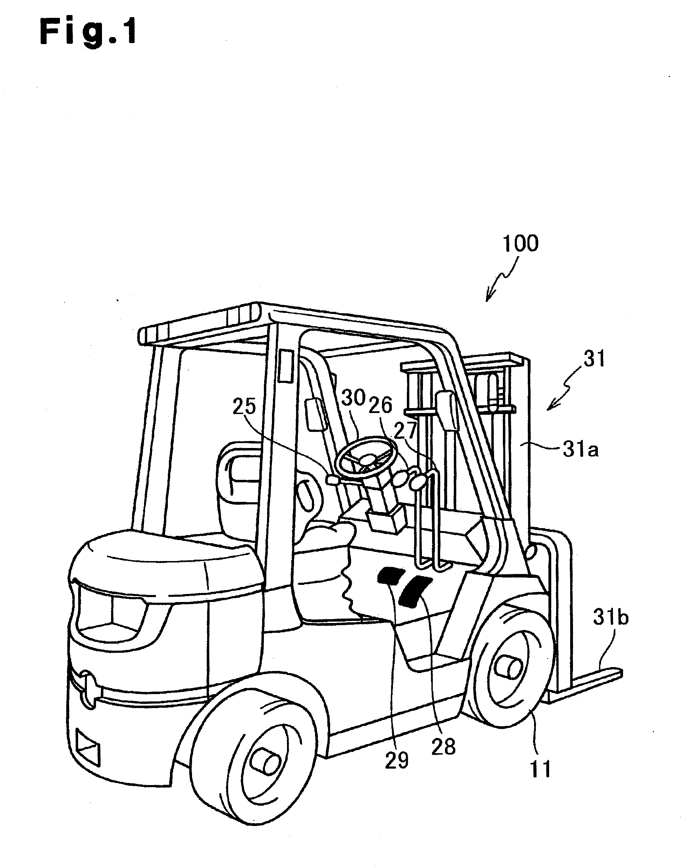

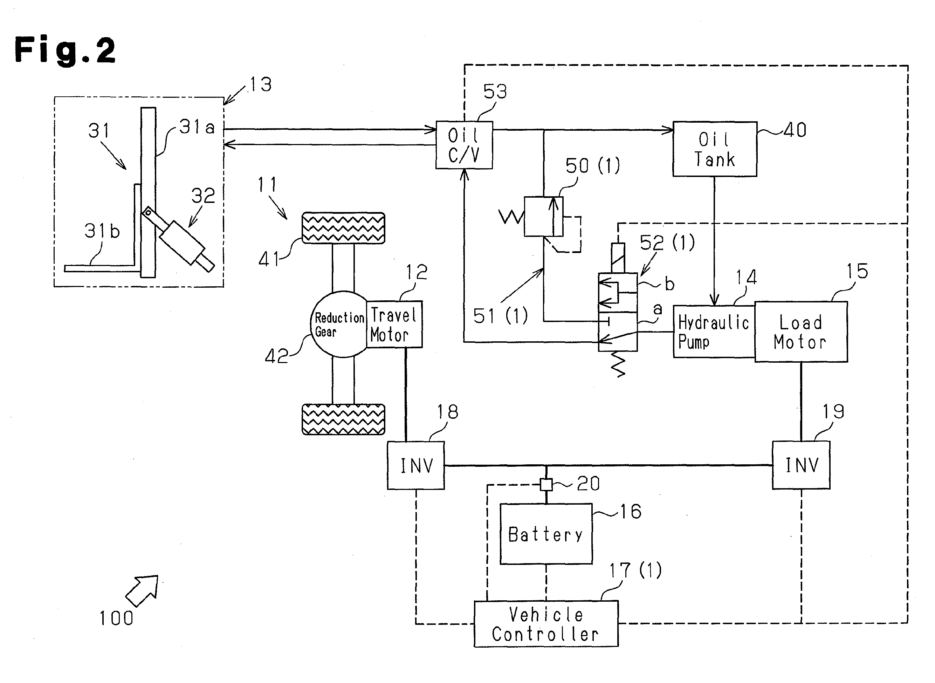

Fig. 1 is a perspective view showing a forklift 100 (industrial vehicle) including a control device 1 according to a first embodiment of the present invention when seen diagonally from the rear. Fig. 2 is a schematic diagram showing main portions of the forklift 100 of Fig. 1. In Fig. 2, broken lines extending from a vehicle controller 17 schematically illustrate the path of control signals transmitted from and received by the vehicle controller 17. The solid lines extending from a battery 16 (electric storage device) to a travel motor 12 and a load motor 15 via inverters 18 and 19 schematically illustrate a power path for transmitting power that drives the motors 12 and 15 and power that has been generated. The solid lines extending from a hydraulic pump 14 to a load device 13 etc. schematically illustrate a hydraulic path.

Referring to Figs. 1 and 2, the forklift 100 includes a travel device 11, the travel motor 12, the load device 13, the hydraulic pump 14, the load motor 15, the battery 16 (electric storage device), and the vehicle controller 17 (power control unit and switch control unit). As shown in Fig. 1, in a section facing toward an operator sitting in the driver's seat, the forklift 100 includes a direction lever 25, a lift lever 26 (load lever), a tilt lever 27 (load lever), an acceleration pedal 28, a brake pedal 29, a handle 30, and the like. The direction lever 25 is an operation member switch operated to switch between a forward position for forwardly moving the forklift 100 and a reverse position for rearwardly moving the forklift 100. The lift lever 26 is an operation member operated when lifting or lowering a fork 31b by operating a lift device 31. The tilt lever 27 is an operation member operated when forwardly tilting a mast 31a or rearwardly tilting the mast 31a by operating a tilt device 32. The acceleration pedal 28 is operated to change the travel speed of the forklift 100, and the brake pedal 29 is operated to apply braking force to the forklift 100 when it is traveling.

As shown in Fig. 2, the travel device 11 includes the travel motor 12, wheels 41, and a reduction gear 42. The wheels 41 are rotated by driving force transmitted from the travel motor 12 via the reduction gear 42. The travel motor 12 is, for example, an alternating current induction motor. The travel inverter 18 converts direct current, which has a predetermined voltage obtained by increasing the voltage of the battery 16 with a boost converter (not shown), to alternating current, which drives the travel motor 12. When the brakes are applied to the forklift 100 or when the forklift 100 is descending down a hill, the travel motor 12 functions as a power generator, in which the generated electric energy is circulated to the battery 16 via the travel inverter 18. This circulation charges the battery 16, which serves as the electric storage device. The electric storage device for storing regenerative power is not limited to the battery 16, and a rechargeable battery may be used.

The load device 13 is operated by the hydraulic pressure of hydraulic oil supplied from the hydraulic pump 14. The load device 13 includes the lift device 31, which lifts and lowers a load (not shown), the tilt device 32, which forwardly and reawardly tilts the lift device 31, and the like. The load device 13 is not limited to the lift device 31 and the tilt device 32 and may be any device operated by hydraulic pressure.

The lift device 31 includes left and right outer masts 31a, and inner masts arranged between the outer masts 31a so that they can be lifted and lowered. The fork 31b is held so that it can be lifted and lowered by a chain connected to a sprocket arranged at the upper part of the inner masts. The outer masts 31a, which are connected to a vehicle body frame of the forklift 100 by the tilt device 32, are tiltable relative to the vehicle body frame. The fork 31b is lifted and lowered when a lift cylinder of the lift device 31 is driven and the inner masts are moved upward and downward.

The hydraulic pump 14, which is driven by the load motor 15, increases the pressure of hydraulic oil from an oil tank 40 and supplies the hydraulic oil to a hydraulic circuit. The hydraulic oil drawn from the oil tank 40 of which pressure has been increased by the hydraulic pump 14 is supplied to the lift device 31 and the tilt device 32 through an oil control valve unit 53.

The load motor 15 is, for example, an alternating current induction motor. The direct current from the battery 16 is converted to alternating current by the load inverter 19, and the alternating current voltage drives the load motor 15.

The vehicle controller 17 is a control unit including a CPU and a memory. The vehicle controller 17 controls the travel inverter 18 based on the operations of the acceleration pedal 28, the brake pedal 29, and the like so that the travel inverter 18 controls the travel device 11. The vehicle controller 17 controls the load inverter 19 based on the operation of the lift lever 26 and the tilt lever 27 so as to perform lifting and lowering of the load with the lift device 31 and forward tilting and rearward tilting with the tilt device 32. The power path connecting the travel inverter 18 and the load inverter 19 to the battery 16 includes a switch 20, which is capable of blocking the transmission of power. The vehicle controller 17 controls the switch 20 so as to switch between states in which the power supply to the battery 16 is permitted and blocked.

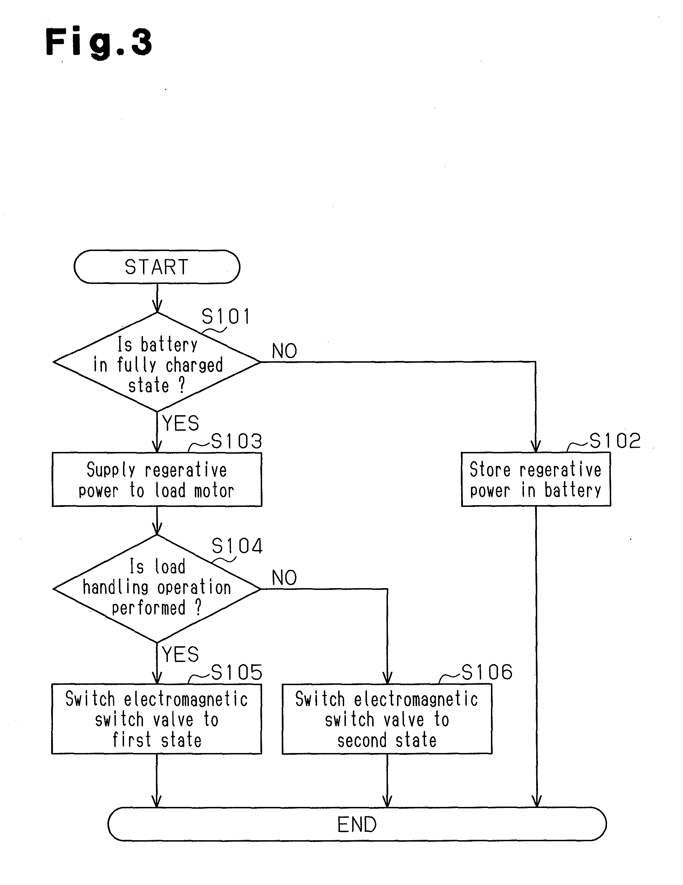

As shown in Fig. 2, the control device 1 of the present embodiment is provided with a relief flow passage 51 (resistance flow passage), which includes a relief valve 50 and an electromagnetic switch valve 52 (open/close valve) for opening and closing the relief flow passage 51. The relief flow passage 51 extends from the electromagnetic switch valve 52, which is arranged in a flow passage connecting the hydraulic pump 14 and the oil control valve unit 53, and is in communication with a flow passage connected to the oil tank 40. The electromagnetic switch valve 52 is switchable between a first state (state in which portion "a" is connected to the hydraulic circuit as viewed in Fig. 2) and a second state (state in which portion "b" is connected to the hydraulic circuit as viewed in Fig. 2). The electromagnetic switch valve 52 in the first state opens the flow passage that draws hydraulic oil from the hydraulic pump 14 to the oil control valve unit 53 and closes the flow passage leading to the relief flow passage 51. The electromagnetic switch valve 52 in the second state opens both the flow passage that draws the hydraulic oil from the hydraulic pump 14 to the oil control valve unit 53 and the flow passage leading to the relief flow passage 51. The switching is automatically controlled by the vehicle controller 17 based on the state of the travel motor 12, the state of the battery 16, and whether or not a load is being handled, as shown in the flowchart of Fig. 3 (details will be hereinafter described).

The regenerative braking of the forklift 100 will now be discussed. The forklift 100 travels when power is supplied from the battery 16 to the travel motor 12 to drive the travel motor 12. When the brake pedal 29 is depressed by the driver as the forklift 100 is traveling, the vehicle controller 17 stops supplying power from the battery 16 to the travel motor 12. This operates the travel motor 12 in idle (state operated by power transmitted from the wheels 41) until the forklift 100 stops traveling. In this state, the travel motor 12 functions as a power generator, and kinetic energy is converted to electric energy.

The power obtained through regenerative braking is supplied to the battery 16 or the load motor 15 through the control executed by the vehicle controller 17 based on the flowchart of Fig. 3. The control executed by the vehicle controller 17 during regenerative braking will now be discussed with reference to the flowchart of Fig. 3. The vehicle controller 17 repetitively executes the routine shown in Fig. 3 in predetermined time intervals when regenerative braking is being performed.

First, whether or not the battery 16 is in a fully charged state is determined in step S101. The determination of whether or not in the fully charged state is performed by comparing a predetermined tolerable voltage and a battery voltage during regenerative braking. Information of the battery voltage is transmitted to the vehicle controller 17 by a voltage sensor (not shown) arranged on the battery 16. If the battery voltage during regenerative braking is greater than or equal to the predetermined tolerable voltage, the battery 16 is determined as being in the fully charged state. The value of the tolerable voltage is not limited to the value of the battery voltage when the state of charge of the battery is 100% and may be a value of the battery voltage when there is a possibility of the state of charge of the battery reaching 100% by storing regenerative power. The voltage sensor does not have to be arranged on the battery 16 and may be arranged in an electric path connected to the battery 16.

When determined that the battery 16 is not in the fully charged state, in step S102, the regenerative power generated by the travel motor 12 is stored in the battery 16. Specifically, the vehicle controller 17 controls the switch 20 so as to allow current to flow from the travel inverter 18 to the battery 16.

When determined that the battery 16 is in the fully charged state, the regenerative power generated by the travel motor 12 is supplied to the load motor 15 and not stored in the battery 16. In step S103, the load motor 15 is driven by the regenerative power. Specifically, the vehicle controller 17 controls the switch 20 so as to block the flow of current from the travel inverter 18 to the battery 16.

When determined that the battery 16 is in the fully charged state, in step s104, it is determined whether or not a load handling operation is being performed. The determination of step S104 is performed by detecting the operation states of the lift lever 26 and the tilt lever 27 with sensors or the like arranged on the levers 26 and 27.

When determined that a load handling operation is being performed, in step 105, the electromagnetic switch valve 52 is switched to the first state. The hydraulic oil is then supplied from the hydraulic pump 14 to the oil control valve unit 53, and the hydraulic oil is not supplied to the relief flow passage 51. Therefore, regenerative power generated through regenerative braking is effectively used as energy for driving the load device 13.

When determined that a load handling operation is not being performed, in step S106, the electromagnetic switch valve 52 is switched to the second state. The hydraulic oil then flows from the pump 14 to the relief flow passage 51. The electromagnetic switch valve 52 is formed so as to also allow the oil control valve unit 53 to be supplied with hydraulic oil in the second state. However, when a load handling operation is not being performed, the hydraulic oil supplied from the hydraulic pump 14 is blocked by the oil control valve unit 53. Thus, the hydraulic oil flows to the oil tank 40 through the relief flow passage 51.

The relief valve 50 is an open/close valve that opens when the pressure of the hydraulic oil from the hydraulic pump 14 exceeds a predetermined pressure. The relief valve 50 is formed so as to have a flow passage resistance that is higher than that of flow passages located at the upstream and downstream sides of the relief valve 50. Therefore, when hydraulic oil from the hydraulic pump 14 passes through the relief valve 50, friction easily occurs between the hydraulic oil and the flow passage in the relief valve 50 and frictional heat is easily generated. That is, the relief flow passage 51 of the present embodiment is formed to convert kinetic energy of the hydraulic oil to frictional heat, which is easily consumable. When the hydraulic oil reaches a predetermined pressure and flows in a sudden manner, a vortex easily forms in the flow of the hydraulic oil in the relief flow passage 51. The formation of the vortex also consumes energy.

As described above, the industrial vehicle control device of the present embodiment is arranged in the forklift 100, which includes the travel motor 12, the battery 16 capable of storing regenerative power generated through regenerative braking by the travel motor 12, the hydraulic pump 14 for supplying hydraulic oil to the hydraulic circuit for operating the lift device 31 and the tilt device 32, and the load motor 15 for driving the hydraulic pump 14. The forklift 100 further includes the relief flow passage 51 for enabling the passage of hydraulic oil supplied from the hydraulic pump 14 while applying flow resistance to the hydraulic oil, the electromagnetic switch valve 52 for opening and closing the relief flow passage 51, and the vehicle controller 17. If the battery 16 is in the fully charged state when regenerative braking is being performed by the travel motor 12, the vehicle controller 17 executes control for supplying regenerative power to the load motor 15. Further, if the battery 16 is in the fully charged state when regenerative braking is being performed by the travel motor 12 and the lift device 31 and tilt device 32 are not performing a load handling operation, the vehicle controller 17 switches the electromagnetic switch valve 52 so as to open the relief flow passage 51.

In this structure, if the battery 16 is in the fully charged state when regenerative braking is being performed by the travel motor 12, the vehicle controller 17 supplies regenerative power to the load motor 15. This prevents the battery 16 from being damaged by overcharge. Thus, when a load handling operation is being performed, the regenerative power is consumed as energy required for the load handling operation. When a load handling operation is not being performed, the vehicle controller 17 switched the electromagnetic switch valve 52 and supplies hydraulic oil from the hydraulic pump 14 to the relief flow passage 51 so that the regenerative power is consumed as frictional heat generated in the relief flow passage 51. This ensures the consumption of surplus regenerative power that cannot be circulated to the battery 16 regardless of the state of the load handling operation.

The surplus regenerative power generated by the regenerative braking can also be consumed just by operating the load motor 15 in idle. However, in order to consume a large amount of regenerative power, the speed of the rotation produced by the load motor 15 must be significantly increased. In such a case, excessive increase in the rotation speed of the load motor 15 may result in seizure of sliding portions in the motor. However, in the present embodiment, the electromagnetic switch valve 52 is switched so that hydraulic oil passes through the relief flow passage 51, the flow passage resistance of which is greater than that of other flow passages. This results in a large rotation resistances acting on the load motor 15. Accordingly, regenerative power may be consumed without excessively increasing the speed of the rotation produced by the load motor 15. This ensures the consumption of a large amount of regenerative power while preventing the seizure of sliding portions in the motor.

The industrial vehicle control device of the present embodiment is provided with the relief flow passage 51, which includes the relief valve 50 for opening the flow passage when the acting hydraulic pressure reaches a predetermined pressure.

In this structure, if the battery 16 is in the fully charged state when regenerative braking is being performed by the travel motor 12 and a load handling operation is not being performed, the flow passage of the relief valve 50 opens as the hydraulic pressure of the hydraulic oil in the relief flow passage 51 that is yet to pass the relief valve 50 reaches the predetermined pressure. As a result, hydraulic oil flows from the hydraulic pump 14 toward the oil tank 40. In this case, when the flow passage opens, the hydraulic oil suddenly passes through the relief valve 50 due to a predetermined pressure difference between the upstream and downstream side of the relief valve 50. Thus, a large amount of energy is consumed by frictional heat. Furthermore, a vortex easily forms in the flow of the hydraulic oil. The formation of a vortex is effective for consuming energy.

The control device for the forklift 100 of the first embodiment includes the relief valve 50 that is capable of applying flow resistance to the hydraulic oil. However, a restriction flow passage in which the flow passage is partially constricted may be used arranged in lieu of the relief valve 50.

In this structure, if the battery 16 is in a fully charged state when regenerative braking is performed by the travel motor 12 and a load handling operation is not being performed, hydraulic oil from the hydraulic pump 14 flows through the restriction flow passage. In the squeeze flow passage, the area of contact between the wall surface of the flow passage and a fixed amount of hydraulic oil passing therethrough increases. This easily generates frictional heat and increases the consumed energy.

The control device 1 of the first embodiment may be applied to a forklift (fuel cell folk lift) further including a fuel cell capable of supplying generated power to an electric storage device such as the battery 16.

A control device 2 of a second embodiment will now be discussed.

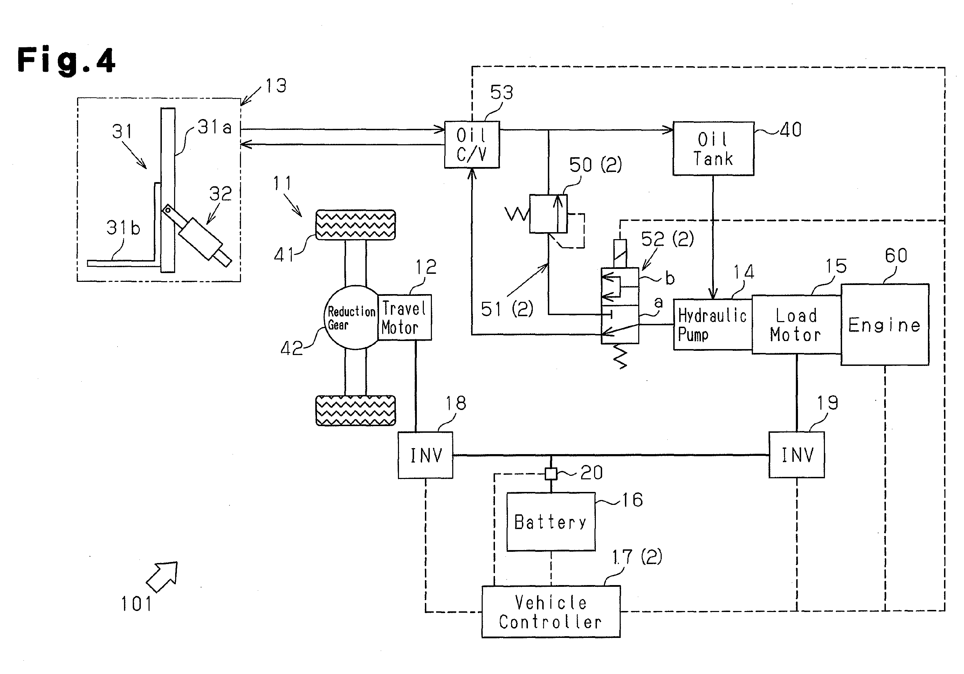

Fig. 4 is a view showing main portions of a forklift 101 (industrial vehicle) including the control device 2. The forklift 100 is of a hybrid type and includes an engine 60 capable of driving the load motor 15. The control device 2 shown in Fig. 4 differs from the control device 1 of the first embodiment in that it is installed in the hybrid type forklift 101. Hereinafter, same reference characters are given to those components that are the same as the corresponding components shown in Fig. 2. Such components will not be described.

In the forklift 101, the engine 60 is driven by a rotation control signal, which is provided from the vehicle controller 17 to a throttle actuator (not shown). A drive shaft of the engine 60 is coaxially connected to a drive shaft of the load motor 15 by a clutch (not shown) capable of transmitting power and cutting the transmission of power. The load motor 15 can be driven as an electric motor in receiving the supply of drive power from the battery 16, and can be driven by the engine 60 to generate power as the power generator. The power generated by the load motor 15 may be stored in the battery 16 via the load inverter 19. The switch control for switching the driving of the load motor 15 between the power of the battery 16 and the power of the engine 60 is performed based on a control command output from the vehicle controller 17.

During regenerative braking performed by the forklift 101, the supply of regenerative power is also controlled in accordance with the flowchart (Fig. 3) of the first embodiment. In detail, when the battery 16 is in a fully charged state, that is, when regenerative power cannot be circulated to the battery 16, the regenerative power is supplied to the load motor 15. This ensures that the regenerative power is consumed by a load handling operation or by frictional heat in the relief flow passage 51.

When a load handling operation is not being performed with the forklift 101, the consumption of regenerative power is not limited to supplying hydraulic oil to the relief flow passage 51. For instance, the regenerative power can be consumed by driving the load motor 15 with regenerative power in a state in which the clutch connects the load motor 15 and the engine 60 (state of power transmission). That is, regenerative power may be consumed by driving (motoring) the engine 60 with the load motor 15 without injecting fuel. The control device 2 may be formed so that the supplying of hydraulic oil to the relief flow passage 51 and motoring are simultaneously performed.

A control device 3 of a third embodiment will now be discussed.

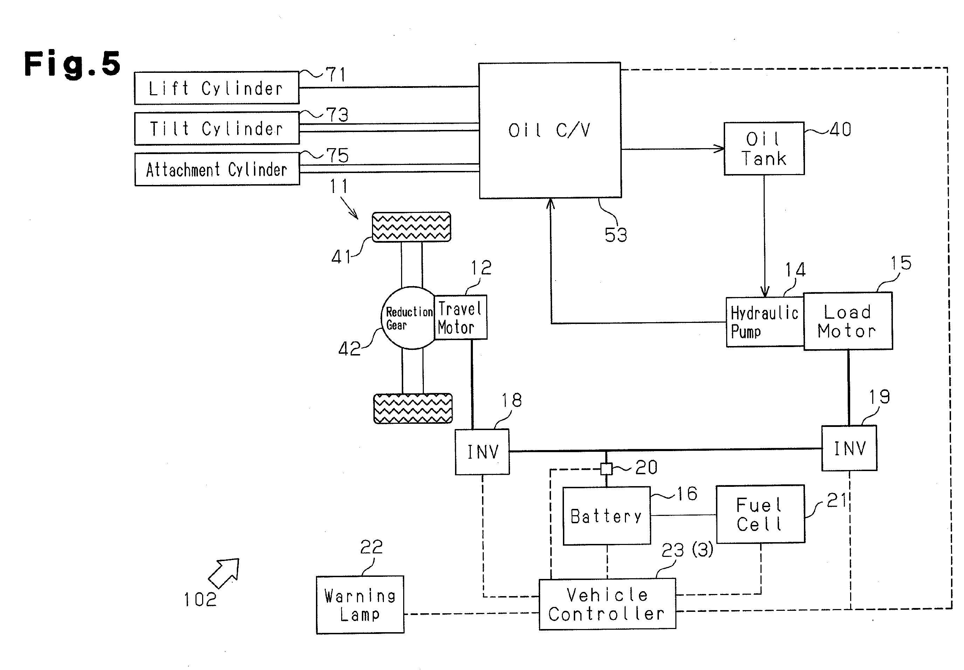

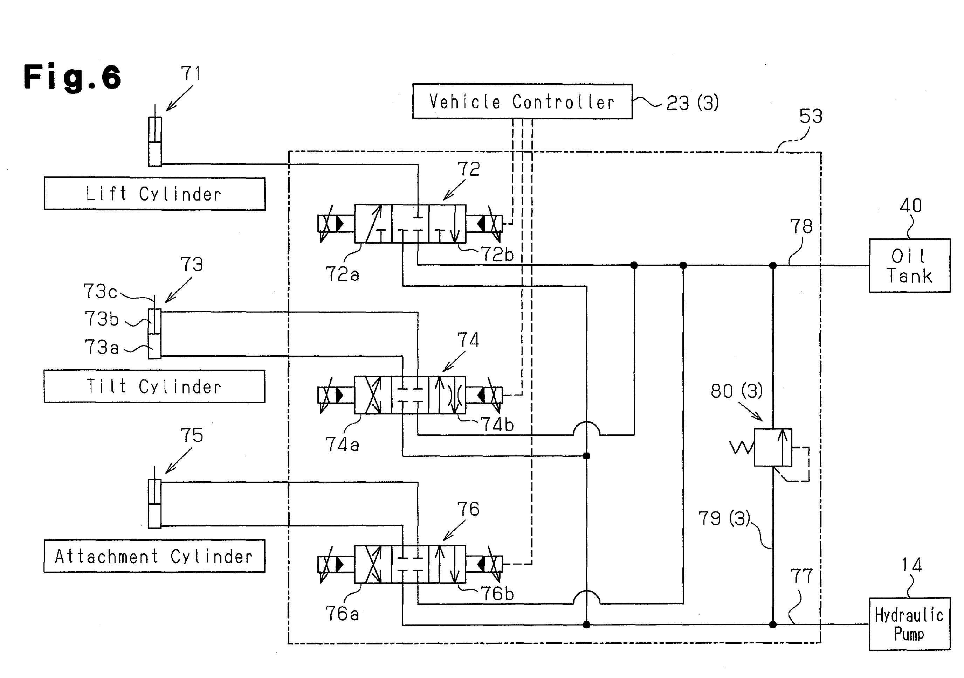

Fig. 5 is a view showing main portions of a forklift 102 including the control device 3. Fig. 6 is a view showing the structure of the oil control valve unit 53 of Fig. 5. Hereinafter, same reference characters are given to those components that are the same as the corresponding components shown in Fig. 2. Such components will not be described.

As shown in Fig. 5, the control device 3 is installed in the forklift 102, which includes a fuel cell 21 capable of supplying the power it generates to the battery 16. The power generated by the fuel cell 21 is transformed by a DC-DC converter and supplied to the battery 16. The battery 16 may be a rechargeable battery such as lithium ion battery or a nickel hydride battery. A condenser (capacitor) may be used as an electric storage device in lieu of the battery 16.

The forklift 102 is provided with the lift device 31, which includes a lift cylinder 71 for lifting or lowering the fork, and the tilt device 32, which includes a tilt cylinder 73 for tilting the lift device 31. The forklift 102 is also provided with an attachment device, which includes an attachment cylinder 75 driven by hydraulic pressure to operate an attachment. The attachment may be an attachment for moving the fork 31b of the lift device 31 to the left and the right, a bail clamp for clamping a box-shaped load from two sides, a roll clamp for clamping a roll of paper or a cylindrical load, and the like.

The control device 3 includes a warning lamp 22, which is arranged at a position where it can be seen by the operator and which is illuminated by an electric signal from the vehicle controller 17. As will be described later, the control device 3 of the third embodiment differs from the control device 1 of the first embodiment in the method for controlling the oil control valve unit 53.

As shown in Fig. 6, the oil control valve unit 53 includes a lift spool valve 72 for switching hydraulic oil supply circuits connected to the lift cylinder 71, a tilt spool valve 74 (tilt switching valve) for switching hydraulic oil supply circuits connected to the tilt cylinder 73, an attachment spool valve 76 for switching hydraulic oil supply circuits connected to the attachment cylinder 75, a pump side circuit 77 supplied with hydraulic oil from the hydraulic pump 14, a tank side circuit 78 in communication with the oil tank 40, and a relief flow passage 79 (resistance flow passage) in communication with the pump side circuit 77 and tank side circuit 78 and including a relief valve 80.

The lift spool valve 72, the tilt spool valve 74, and the attachment spool valve 76 are each three-position switch valves. The vehicle controller 23 transmits a control signal to each of the lift spool valve 72, the tilt spool valve 74, and the attachment spool valve 76 based on the operation of a load lever or the like. The control signal applies pilot hydraulic pressure to the spool valves 72, 74, and 76 so that the spool valves 72, 74, and 76 are switched to appropriate positions. The spool valves 72, 74, and 76 are held at neutral positions (state shown in Fig. 6) when there is no signals being transmitted from the vehicle controller 23.

Specifically, when the lift spool valve 72 is switched to a position in which portion 72a shown in Fig. 6 is connected to a hydraulic pressure circuit, hydraulic oil is supplied from the pump side circuit 77 to the lift cylinder 71. This lifts the fork 31b in the lift device 31. When the lift spool valve 72 is switched to a position in which portion 72b shown in Fig. 6 is connected to a hydraulic pressure circuit, the lift cylinder 71 comes into communication with the tank side circuit 78, and the hydraulic oil supplied to the lift cylinder 71 is discharged to the oil tank 40 through the tank side circuit 78. This lowers the fork 31b.

When the tilt spool valve 74 is switched to a position in which portion 74b shown in Fig. 6 is connected to a hydraulic circuit (hereinafter referred to as rearward tilting position 74b), hydraulic oil is supplied from the pump side circuit 77 to a bottom chamber 73a in the tilt cylinder 73, and a rod chamber 73b in the tilt cylinder 73 comes into communication with the tank side circuit 78. This projects a piston rod 73c and rearwardly tilts the lift device 31. When the tilt spool valve 74 is switched to a position in which portion 74a shown in Fig. 6 is connected to a hydraulic circuit (hereinafter referred to as forward tilting position 74a), hydraulic oil is supplied from the pump side circuit 77 to the rod chamber 73b of the tilt cylinder 73, and the bottom chamber 73a of the tilt cylinder 73 comes into communication with the tank side circuit 78. This retracts the piston rod 73c into the cylinder and forwardly tilts the lift device 31.

When the attachment spool valve 76 is switched to position 76a or 76b as shown in Fig. 6, hydraulic oil is supplied to the attachment cylinder 75. Thus, the attachment cylinder 75 performs a predetermined operation.

The regenerative braking performed by the forklift 100 will now be described.

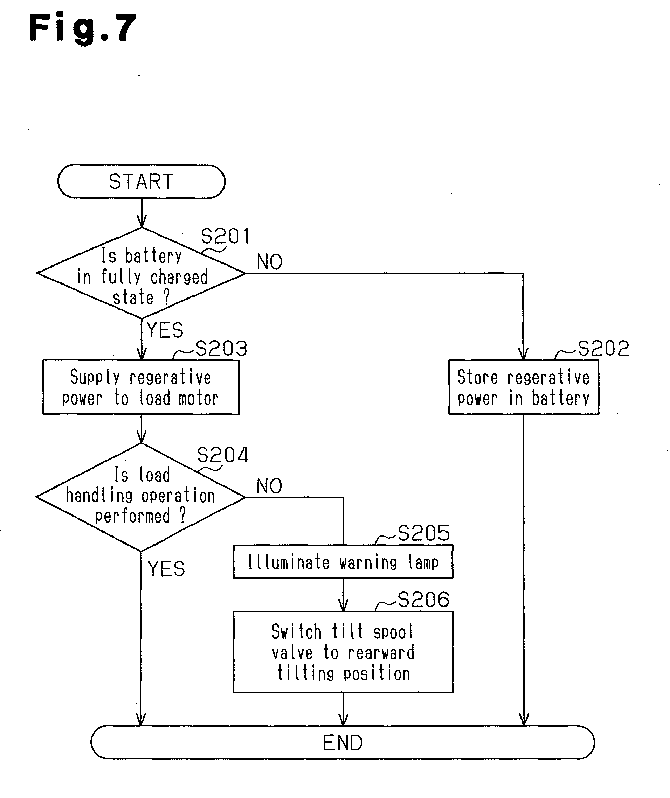

The power obtained by the regenerative braking is supplied to the battery 16 or the load motor 15 by a control executed by the vehicle controller 23 based on the flowchart shown in Fig. 7. The control executed by the vehicle controller 23 will now be described with reference to the flowchart shown in Fig. 7. The vehicle controller 23 repeatedly executes the routine shown in Fig. 7 in predetermined time intervals while performing regenerative braking.

In step S201, it is determined whether or not the battery 16 is in a fully charged state. The determination in step S201 is similar to the determination in the first embodiment. When determined that the battery 16 is not in the fully charged state, in step S202, the regenerative power generated by the travel motor 12 is stored in the battery 16.

When determined that the battery 16 is in the fully charged state, in step S203, the regenerative power generated by the travel motor 12 is supplied to the load motor 15 without being stored in the battery 16. As a result, the load motor 15 is driven by the regenerative power.

When determined that the battery 16 is in a fully charged state, in step S204, it is further determined whether or not a load handling operation is being performed. A load handling operation is an operation driven by at least one of the lift cylinder 71, the tilt cylinder 73, and the attachment cylinder 75. The determination as to whether or not a load handling operation is being performed is based on detection signals of sensors or the like arranged on the lift lever 26, the tilt lever 27, and other load levers. That is, it is determined that a load handling operation is being performed when detecting with a sensor or the like that a predetermined operation is being performed by a load lever, and it is determined that a load handling operation is not being performed when sensors or the like do not detect any predetermined operation being performed with the load levers.

When determined that a load handling operation is being performed, the spool valves 72, 74, and 76 of the oil control valve unit 53 are maintained at positions that are in accordance with the operations of the load levers. In this case, the regenerative power generated through regenerative braking is effectively used as energy for driving the load device 13. In the present embodiment, the lowering of the fork with the lift device 31 does not require hydraulic oil to be supplied from the hydraulic pump 14. Accordingly, subtle energy is consumed when lowering the fork 31b. Thus, when only lowering of the fork is being performed by operating a load lever, this may be determined in step S204 as a load handling operation not being performed.

When determined that a load handling operation is not being performed, in step S205, the warning lamp 22 is illuminated by the vehicle controller 23. Instead of illuminating the warning lamp 22, a warning buzzer may be issued from a speaker or the like. Then, the vehicle controller 23 transmits an electric signal to the tilt spool valve 74. In step S206, the tilt spool valve 74 is switched to the rearward tilting position 74b. This drives the tilt device 32 and rearwardly tilts the lift device 31.

When the tilt spool valve 74 is switched to the rearward tilting position 74b, as mentioned above, hydraulic oil is supplied from the hydraulic pump 14 to the bottom chamber 73a of the tilt cylinder 73. This projects the piston rod of the tilt cylinder 73 as the volume of the bottom chamber 73a increases. When the piston rod projects to a predetermined stroke end, the pressure of the bottom chamber 73a increases. Further, the pressure of the pump side circuit 77, which is in communication with the bottom chamber 73a, increases. When the pressure of the pump side circuit 77 reaches the relief pressure of the relief valve 80, the relief valve 80 opens and releases the hydraulic oil of the pump side circuit 77 into the tank side circuit 78.

The relief valve 80 is an open/close valve that opens when the pressure of the hydraulic oil in the pump side circuit 77 exceeds a predetermined pressure. The relief valve 80 is formed so that the flow passage resistance of the flow passage extending therethrough is higher than the flow passage located at the upstream and downstream side of the relief valve 80. Accordingly, when the hydraulic oil from the pump side circuit 77 passes the relief valve 80, friction easily occurs between the hydraulic oil and the flow passage of the relief valve 80, and frictional heat is thereby easily generated. In other words, the relief flow passage 79 of the present embodiment is formed to convert kinetic energy of the hydraulic oil to frictional heat, which is easily consumable. When the hydraulic oil reaches a predetermined pressure and flows in a sudden manner, a vortex easily forms in the flow in the relief flow passage 79. The formation of the vortex also consumes energy.

The energy is also consumed by the rearward tilting of the lift device 31.

When informed that rearward tilting is being automatically performed by the warning lamp 22 or the like, the operator may stop the rearward tilting by, for example, operating a button or the like arranged near the driver's seat. In such a case, the spool valves 72, 74, and 76 would be held at neutral positions. Then, when the pressure of the pump side circuit 77 increases and reaches a predetermined pressure, the relief valve 80 would open, and energy would be consumed when the hydraulic oil passes through the relief valve 80.

As described above, the control device 3 of the third embodiment is arranged in the forklift 102, which is provided with the lift device 31 serving as a load device, the tilt cylinder 73 for tilting the lift device 31, and the tilt spool valve 74 arranged between the tilt cylinder 73 and the hydraulic pump 14. The tilt spool valve 74 is switchable between at least the rearward tilting position 74b, in which the pump side circuit 77 comes into communication with the bottom chamber 73a of the tilt cylinder 73 so as to rearwardly tilt the lift device 31, and the forward tilting position 74a, in which the pump side circuit 77 comes into communication with the rod chamber 73b of the tilt cylinder 73 so as to forwardly tilt the lift device 31. Further, the forklift 102 is provided with the relief flow passage 79, which includes the relief valve 80 that opens when the pressure of the pump side circuit 77 exceeds a predetermined pressure. If the battery 16 is in a fully charged state when regenerative braking is being performed by the travel motor 12, and at the same time, there is no operation being performed by the lift device 31, the tilt device 32 and no operation being performed by an attachment driven by hydraulic pressure, the vehicle controller 23 switches the tilt spool valve 74 to the rearward tilting position 74b.

In this structure, if the battery 16 is in a fully charged state when regenerative braking is being performed by the travel motor 12, the vehicle controller 23 supplies regenerative power to the load motor 15. This prevents damage that would result from overcharging from being inflicted on the battery 16, the fuel cell 21 and the like that are electrically connected to the battery 16. When a load handling operation is being performed, regenerative power is consumed as energy that is required for the load handling operation.

When a load handling operation is not being performed, the tilt spool valve 74 is switched to the rearward tilting position 74b by the vehicle controller 23. Thus, the tilt cylinder 73 is driven so as to rearward tilt the lift device 31, and energy is consumed by driving the tilt cylinder 73.

Furthermore, when the tilting of the lift device 31 reaches a predetermined tilt angle and the driving of the tilt cylinder 73 becomes restricted, the volume of the bottom chamber 73a, which is in communication with the pump side circuit 77 of the tilt cylinder 73, can no longer be increased. This increases the pressure of the pump side circuit 77. When the hydraulic pressure of the relief flow passage 79 reaches a predetermined pressure, the flow passage opens and hydraulic oil flows therethrough. When the flow passage opens, the hydraulic oil suddenly passes through the relief valve 80 due to a predetermined pressure difference between the upstream and downstream side of the relief valve 80. Thus, a large amount of energy is consumed by frictional heat. Furthermore, a vortex easily forms in the flow of the hydraulic oil, and energy may also be consumed by the formation of the vortex. This ensures consumption of surplus regenerative power that cannot be circulated to the battery 16 regardless of the state of a load handling operation.

In the third embodiment, the control device 3 is applied to the forklift 102 provided with the fuel cell 21. However, the control device 3 may be applied, for example, to a battery forklift that does not have the fuel cell 21. A battery forklift is a forklift that can drive the load motor 15 and the travel motor 12 with the power stored in the battery 16. In the forklift 102, an engine for driving the load motor 15 may be used in lieu of the fuel cell 21 serving as a power supply source. That is, the control device 3 may be applied to a hybrid forklift that drives the load motor 15, which serves as a power generator, with the engine 60 and stores the generated power in the battery 16.

The embodiments of the present invention have been described above. However, the present invention is not limited to the above-described embodiments and may be embodied in many other specific forms without departing from the scope of the claims.

In the control device of the present invention, each of the vehicle controllers 17 and 23 controls the supply destination of regenerative power (control executed as power control unit) and switch controls the electromagnetic switch valve 52 (control executed as switch control unit). However, two controllers may be used to separately execute control of the supply destination of regenerative power generated by the travel motor 12 and the switch control of the electromagnetic switch valve 52.

The control device of the present invention is not limited to a forklift serving as an industrial vehicle and may be applied to any industrial vehicle that performs a load handling operation using hydraulic pressure.

## Claims

1. A control device for an industrial vehicle including a travel motor, an electric storage device capable of storing regenerative power generated through regenerative braking performed by the travel motor, a load device, a hydraulic pump for supplying a hydraulic circuit with hydraulic oil to operate the load device, and a load motor for driving the hydraulic pump, the control device comprising:
a power control unit which executes control for supplying the load motor with the regenerative power when the electric storage device is in a fully charged state during regenerative braking performed by the travel motor; and
a resistance flow passage which is arranged in the hydraulic circuit and which enables passage of hydraulic oil while applying flow resistance to the hydraulic oil;
wherein when the electric storage device is in the fully charged state during regenerative braking performed by the travel motor and, at the same time, the load device is not performing a load handling operation, the hydraulic oil supplied from the hydraulic pump is guided to the resistance flow passage.

2. The control device according to claim 1, further comprising:
an open/close valve which selectively opens and closes a flow passage that connects the hydraulic pump to the resistance flow passage; and
a switch control unit which switches the open/close valve to an open state when the electric storage device is in the fully charged state during regenerative braking performed by the travel motor and, at the same time, the load device is not performing a load handling operation.

3. The control device according to claim 2, wherein the resistance flow passage is a relief flow passage including a relief valve which opens the flow passage when an acting hydraulic pressure reaches a predetermined pressure.

4. The control device according to claim 2, wherein the resistance flow passage is a restriction flow passage in which the flow passage is partially constricted.

5. The control device according to claim 1, further comprising:
a lift device serving as the load device;
a tilt cylinder which tilts the lift device; and
a tilt switch valve arranged between the tilt cylinder and the hydraulic pump, with the tilt switch valve being switchable to at least a rearward tilting position in which the hydraulic pump is connected to the tilt cylinder so as to rearwardly tilt the lift device;
wherein the resistance flow passage is a relief flow passage including a relief valve that opens when pressure of the hydraulic circuit between the hydraulic pump and the tilt switch valve exceeds a predetermined pressure; and
a switch control unit which switches the tilt switch valve to the rearward tilting position when the electric storage device is in the fully charged state during regenerative braking performed by the travel motor and, at the same time, the load device is not performing a load handling operation.
